# EUROPEAN PATENT SPECIFICATION

(11) **EP 3 972 216 B1**
(45) Date of publication and mention of the grant of the patent: **11.09.2024**
(21) Application number: 20382829.8
(22) Date of filing: 21.09.2020
(51) Int. Cl.: H04L 9/40

(54) **INFORMATION SYSTEM FOR THE INTEGRATION OF DIGITAL CERTIFICATES AND METHOD FOR OPERATING SAID INFORMATION SYSTEM**
INFORMATIONSSYSTEM ZUR INTEGRATION VON DIGITALEN ZERTIFIKATEN UND VERFAHREN ZUM BETREIBEN DIESES INFORMATIONSSYSTEMS
SYSTÈME D'INFORMATION POUR L'INTÉGRATION DE CERTIFICATS NUMÉRIQUES ET PROCÉDÉ POUR FAIRE FONCTIONNER LEDIT SYSTÈME D'INFORMATION

(43) Date of publication of application: 23.03.2022
(73) Proprietor: Ivnosys Soluciones, S.L.U., 46980 Paterna (Valencia) (ES)
(72) Inventor: RUIZ SIERRA, Sergio, 46980 Paterna (Valencia) (ES); CASTELLÓ RODRIGUEZ, Jaime, 46980 Paterna (Valencia) (ES)
(74) Representative: Ibarra Garcia, Isabel

(56) References cited:
- PRIESNITZ FILHO WALTER ET AL: "Privacy-preserving attribute aggregation in eID federations", FUTURE GENERATION COMPUTER SYSTEMS, vol. 92, 24 September 2018 (2018-09-24), NL, pages 1 - 16, XP055778412, ISSN: 0167-739X, Retrieved from the Internet <URL:https://doi.org/10.1016/j.future.2018.09.025> [retrieved on 20210223], DOI: 10.1016/j.future.2018.09.025
- CHADWICK D W ET AL: "Attribute Aggregation in Federated Identity Management", COMPUTER, IEEE COMPUTER SOCIETY, USA, vol. 42, no. 5, 12 June 2009 (2009-06-12), pages 33 - 40, XP011262150, ISSN: 0018-9162
- MD SADEK FERDOUS ET AL: "Analysing attribute aggregation models in federated identity management", SECURITY OF INFORMATION AND NETWORKS, ACM, 2 PENN PLAZA, SUITE 701 NEW YORK NY 10121-0701 USA, 26 November 2013 (2013-11-26), pages 181 - 188, XP058036020, ISBN: 978-1-4503-2498-4, DOI: 10.1145/2523514.2526998
- CARRETERO JESUS ET AL: "Federated Identity Architecture of the European eID System", IEEE ACCESS, vol. 6, 17 December 2018 (2018-12-17), pages 75302 - 75326, XP011701313, DOI: 10.1109/ACCESS.2018.2882870
- CHADWICK DAVID W ED - MARTIN ATZMUELLER ET AL: "Federated Identity Management", 30 September 2009, BIG DATA ANALYTICS IN THE SOCIAL AND UBIQUITOUS CONTEXT : 5TH INTERNATIONAL WORKSHOP ON MODELING SOCIAL MEDIA, MSM 2014, 5TH INTERNATIONAL WORKSHOP ON MINING UBIQUITOUS AND SOCIAL ENVIRONMENTS, MUSE 2014 AND FIRST INTERNATIONAL WORKSHOP ON MACHINE LE, ISBN: 978-3-642-17318-9, XP047380419

## Description

### FIELD OF THE INVENTION

The present invention generally relates to the field of information technology and secure authentication of an end user over the Internet. More specifically, the invention relates to an information system which integrates one or more digital certificates. The invention can be preferably applied to risk management in banking or insurance sectors.

### BACKGROUND OF THE INVENTION

A digital certificate is an essential basis for the identification of individuals or legal entities through official and reliable data sources, thereby constituting a secure means that can technically and legally allow verifying the identity of said entities over the Internet. Further, digital certificates enable the electronic signature of documents in a secure way, reducing the risk of tampering and generating reliable proofs of work and ownership through said signature.

The issuance and use of digital certificates are normally based on standards and legal regulations, such as the European Union (EU) regulation elDAS ("electronic IDentification, Authentication and trust Services") which states:
- The conditions under which EU member states must recognise the means of electronic identification of natural and legal persons belonging to a notified electronic identification system of another member state. In this way, it ensures that people, companies, and governments can use their own national electronic identification schemes to access public services available online in other EU members.
- The rules for trust services and the legal framework for electronic signature, electronic time stamps and documents, certified electronic delivery services and certificates for website authentication with the same legal status as their paper-based equivalents. Only by providing trust on the legal validity of these services, businesses and citizens will adopt the digital means as their principal way of interaction.

The main advantages of using a digital certificate as credential for verifying the identity of an entity (person or company) comprise:
- Identifying the signer unequivocally before when requesting or providing digital services over the Internet.
- Ensuring the integrity of signed documents by including unique information on the side of the signer. In this way, an electronic signature proves that the document remains unaltered since its application.
- Ensuring non-repudiation of origin, which means that the signer cannot deny the authorship of the electronic signature. By this property, an entity that has signed some information cannot later deny having signed it.

Digital certificates are issued by competent entities, better known as Certification Authorities (CA) and contain relevant information for verifying the owner's identity, whether it is a person or a specific entity (company, institution, etc.). The digital certificate comprises, at least, the following: owner's data (such as the name or the tax identification number), public and private keys, issuance and expiration dates and other information about the issuing entity.

The digital certificate comprises two sorts of keys:
- A public key which contains basic information about the certificate, certificate's owner, and the certification authority (CA) that issues said digital certificate. The CA acts as a trusted third party, trusted both by the owner of the certificate and by the party relying upon the certificate. Moreover, the CA stores public keys and their owners. The format of these certificates is specified, for instance, by the X.509 standard. The public key can be seen by everyone receiving a document signed by such a certificate.
- A private key which is not made available publicly but kept secret by the certificate's owner and protected by a password, PIN, or another similar securitisation method. In this way, the private key is not known and cannot be obtained by someone who receives a document signed with the certificate. The private key is used during the digital signature procedure so that it provides information about the identity of the entity that signed it.

A digital certificate may have different physical supports:
- Software certificates, which may be stored in a computer (i.e. in a certificate manager) and other external electronic devices (hard disks, flash drives, etc.).
- Hardware certificates, which are contained in a cryptographic smart card which comprises an integrated circuit card (internal chip). One example of these certificates is the electronic identification card.
- Centralised certificates, which are stored in the cloud and are accessible to the user in a remote way.

Further, digital certificates are also classified according to the information they store. For instance, there exist natural person certificates, certificates of legal entity representative or public administration certificates, among others.

With regard to their validity and revocation, sometimes it is possible to invalidate a certificate before expiration by a request to the corresponding certification authority. Some of the most common reasons to revoke a certificate are:
- Voluntary request from the owner, due to loss, disuse or because it contains misinformation.
- After completion of the tasks or objectives for which it has been issued, thus no longer being necessary.
- The demise of the owner.

There exist many authentication procedures regarding the contracting of product or services of different nature. When contracting a service or a product, sometimes the supplier party may require a risk analysis to evaluate certain factors (economic status, criminal record, etc.) before validating an agreement. However, the obtention of said information mainly falls on the contracting party, who must carry out the appropriate procedures with different and departments of several entities (e.g. offices of Public Administration) to gather all what is required. This complex process involves significant drawbacks at the logistics management, and also from the administrative and legal points of view. For example, the supplier of the service or product almost completely depends on the contracting party, since it is really difficult to control and avoid the risk of fraud by reviewing and checking all the information provided by the client.

Other authentication solutions are known in the art. For instance, the articles *"*Privacy-preserving attribute aggregation in elD federations" (Priesnitz et al. in Future Generation Computer Systems, 2018), *"*Attribute generation in Federated Identity Management" (Chadwick et al. in Computer, IEEE Computer Society, USA, 2009) and *"*Analysing attribute aggregation models in federated identity management" (Ferdous et al. in Security of Information and Networks, ACM, 2013) disclose different system architectures for managing attributes associated to identified users. However, these solutions require the end user to authenticate separately before a plurality of identity systems to retrieve the attribute information. Contrary to such proposal, the invention provides a more advantageous solution involving less complexity for both the client and the supplier of a transaction.

### SUMMARY OF THE INVENTION

The present invention overcomes the aforementioned problems and provides a server system that enables one or more clients to obtain information from one or more final users, straightforwardly from reliable third-party sources instead of relying on the information provided by said final users. Indeed, the invention is aimed at providing with an information system that is able to integrate one or more digital certificates of a final user, then to collect information of said client from different trusted third-party sources (i.e. Public Administration) and, finally, to report the consolidated data to a client. Through personal identification in electronic websites (usually with an electronic certificate), the invention can request data and obtain certificates in real time on different Public Administrations. This process provides with significant time and cost savings. But more importantly, it avoids the possibility of fraud since it is the Public Administrations or Government Entities themselves who provide the required documentation and information.

The invention provides an information system that integrates with the electronic websites of different government agencies (further referred to as certifying authorities) in order to obtain information associated with an entity (natural person or company) and corresponding digital certificates. The process of integrating and obtaining information can be adapted and parametrised according to the corresponding administrative procedure. Some examples of preferred applications of the invention are:
- Obtaining a certificate proving that tax obligations of certain individual are up to date.
- Obtaining information on indebtedness with the Tax Agency and the Social Security in a banking verification of financial risks or insurance company.
- Obtaining a certificate of absence of criminal records.

A first object of the invention relates to an information system for managing at least one digital certificate from an end user in electronic transactions. Advantageously, the system comprises, at least:
- A server which comprises, in turn, a back-end application configured to obtain trusted information on behalf of an end user from at least one certifying authority by means of the digital certificate.
- A client which comprises computational means for requesting electronic transactions to the server on behalf of the end user, and first electronic delivery means for sending identification information about the end user to the server.
- A workstation operable by the end user, which comprises a gateway application configured to send the digital certificate to the server.

In a preferred embodiment of the invention, the gateway application of the information system further comprises searching means adapted to automatically search the digital certificate locally installed in the workstation. In a further preferred embodiment of the invention, the searching means are adapted to automatically search further digital certificates in the workstation. In this way, the gateway application is configured to select which certificates are needed for conducting the electronic transaction.

In a non-limitative embodiment, the information system further comprises at least one secured encrypted channel to conduct the electronic transactions among different elements of the invention, in particular, the server, the client, the certifying authorities and the end user workstation.

In other embodiments of the information system, the server further comprises a server web interface through which it communicates with the client or at least one certifying authority.

In other preferred embodiments of the information system, the server further comprises a service catalogue database with a list of plugins associated with different electronic transactions. In this way, said list comprises information about which certifying authorities are verified depending on the required particular electronic transaction.

In another embodiment of the information system, the server of the information system further comprises data processing means adapted to automatically process and interpret the information exchange among the server, the client, the certifying authorities, and the workstation.

In a particular embodiment, the server of the information system further comprises second electronic delivery means adapted to send installation requests to the workstation and data storage means adapted to store end user digital certificates. Advantageously, these data store means enable the digital certificate storage to reuse it in future transactions required by the same end user. These data storage means comprise one or more databases. In more preferred embodiments, the installation request comprises a link to a website where the gateway application is hosted or a file with said gateway application attached.

Other alternative embodiments of the invention comprise a plurality of servers, clients and/or workstations. Advantageously, a plurality of servers provides data redundancy and additional security.

A second object of the invention discloses a method for managing at least one digital certificate of an end user in electronic transactions, wherein said method comprises the use of the information system described above, and further comprises performing the following steps:
a) The end user requests an electronic transaction to a client.
b) The client requires identification information to the end user.
c) The client and the server establish a communication to one another.
d) The client sends a request to the server for an electronic transaction on behalf of the end user comprising the identification information.
e) The server obtains at least one valid digital certificate suitable for performing the electronic transaction.
f) The server obtains trusted information about the end user from one or more certification authorities by means of one or more digital certificates.
g) The server sends to the client the trusted information obtained from the certification authorities.

In a preferred embodiment of the method of the invention, the server obtains the digital certificate by verifying whether or not it exists at least one valid digital certificate available for performing the electronic transaction and stored in the data storage means; followed by alternatively performing one of the following options:
a) if at least one valid digital certificate exists, it is used for requesting trusted information to the certification authorities.
b) otherwise, the server sends to the end user workstation an installation request in order that the end user downloads and executes the gateway application in order to providing the server with said digital certificates.

In a more preferred embodiment of the invention, the server further transforms the trusted information acquired from the certifying authorities into interpreted trusted information by means of data processing means, before sending said interpreted trusted information to the client. In this way, the server may use standard scraping techniques to structure the raw data received from the certifying authorities, depending on the format requirements of the client.

In alternative embodiments of the invention, the digital certificate is stored in the server in order to reuse said digital certificate in future transactions, prior acceptance of the end user. In this way, it avoids unnecessary additional information exchange with the end user.

In further preferred embodiments of the invention, the server is configured to disaggregate and anonymise the trusted information and obtain statistics from said information.

In the context of the present invention, the term "machine" or "workstation" refers to any computer means (computer, mobile phone, tablet or other suitable electronic device) comprising the hardware and software means required for installing and executing any component of the invention. Moreover, an "electronic transaction" or simply "transaction" refers to the information handshake among different elements of the system disclosed in the present application in order to acquire a product or service, or any other procedure involving an information validation.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The accompanying drawings comprise specifically the following figures:
Figure 1 corresponds to a diagram of the main components of the invention: the server, the client(s), the certification authority (or authorities) and the end user. The main components of the server have been detailed.
Figure 2 corresponds to a preferred embodiment of the invention in which the main components of the client and the end user are shown.
Figure 3 contains a flowchart summarising the operation of the invention between the end user (e.g. a company or a natural person) and the server, which communicates with the client and the third-party certification entity.

### Numerical references used in the drawings:

| | |
|---|---|
| 1 | Server |
| 11 | Back-end application |
| 12 | Server web interface |
| 13 | Web services of the server |
| 14 | Data storage means |
| 2 | Client |
| 21 | Client web interface (with graphical user interface or GUI) |
| 22 | Digital certificate of the client |
| 3 | Certifying authority (third-party trusted service) |
| 4 | End user workstation |
| 41 | Web browser of the end user workstation |
| 42 | Gateway application (including the client certification provider) |
| 43 | Digital certificate of the end user |

### DETAILED DESCRIPTION OF THE INVENTION

The invention proposes a solution based on an information system, intended to manage information and documentation data from different electronic websites and online platforms (for example, from the official authorities), in real time and in a secure way. The general purpose of the invention can be illustrated with the following example: a bank requires the financial status verification of a natural or legal person (e.g. an individual or a company) in order to issue a loan. In this context, instead of requiring this person (hereinafter referred to as end user) a set of required data, the bank may use the system of the invention to obtain relevant information from official sources (government, tax agencies, etc.) with the prior consent of the end user.

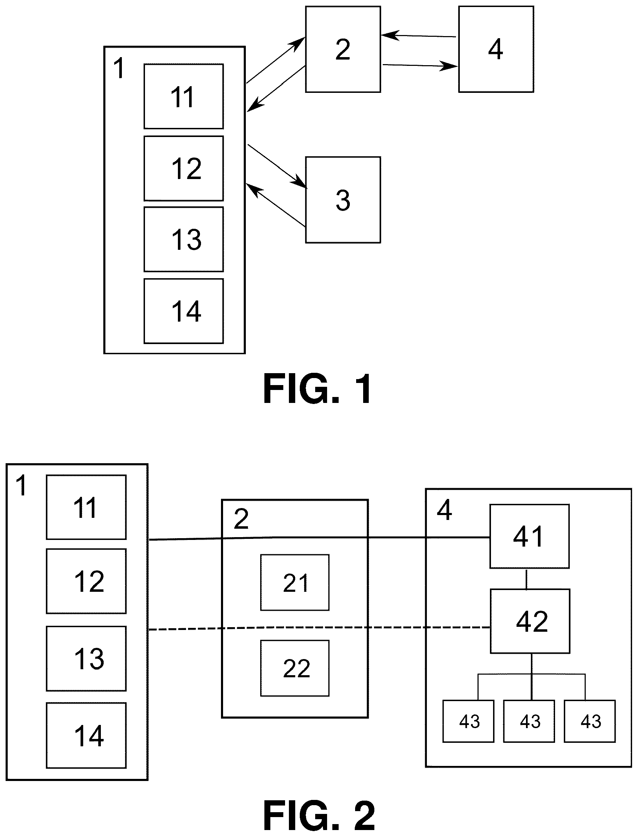

The architecture of the system according to a preferred embodiment of the invention is summarised in the Figure 1, which comprises: a server (1), a client (2), a certification authority (3) or third-party and an end user workstation (4). In this particular case, the server (1) comprises a back-end application (11) of the information system, the client (2) is identified as the bank, the certification authority (3) or authorities are the third-party official sources of information (government agencies, etc.) and the end user uses a workstation (4). The main components of the server (1) have also been detailed in Figure 1, comprising: the back-end application (11), which operates as a gateway; the server web interface (12); web services (13) comprising service catalogue databases and access to centralised certificates (e.g. X509 certificates) of different end users; and optional data storage means (14), such as one or more local databases, for storing different user credentials (i.e. digital certificates).

Figure 2 corresponds to a further preferred embodiment of the invention in which the main components of the client (2) and the end user workstation (4) are displayed. In particular, the client (2) comprises a client web interface (21) for communicating with the server (1) and an optional digital certificate (22). The end user workstation (4) comprises a web browser (41), a gateway application (42) and a plurality of digital certificates (43), in this case, local digital certificates (43). The client web interface (21) enables the access to the server web interface (12), thereby serving as the front-end of the invention. When one or more local digital certificates (43) of the end user are involved in the authentication process, the gateway application (42) comprises a module for reading the local digital certificates (43), which is identified as a client certification provider. This client certification provider is intended to enable the use of the local digital certificates (43) for the process of identifying the end user before the public administrations in the context of a transaction. In this way, thanks to client certification provider, the local digital certificates (43) are accessible to the client web interface (21) from which the transaction is being managed.

The basic steps to obtain information about an end user with the information system involve:
- The client (2) is authenticated in order to communicate with the server (1), with or without a digital certificate (22). Alternatively, any other authentication methods (i.e. password, etc.) can be used instead.
- The client (2) requires information (credentials, etc.) to the end user workstation (4), which is introduced in a form and sent to the server (1).
- By making use of such information, the server (1) acts as a gateway and handle queries to the certification authorities (3) which constitute the data sources storing the available information regarding the end user on its behalf.
- A consolidated document is created with all the information obtained from the end user. Then, the document is delivered to the client (2) entity that assesses whether or not the end user meets the technical and economic requirements for the acquisition of the product (in this case, the loan), service or other transaction.

The operation of the information management platform provided by this invention is possible since it is the end user, who is the interested party in a certain transaction and provides the server (1) with the necessary credentials, such as its digital certificates (43), for the identification before the certifying authorities (3) websites in order to verify end user information. In this way, the invention can embed itself into a third-party corporate application, thereby integrating itself as one more element of the administrative flow defined said third-party entity. This approach fosters the automatised data management and collation received from official and trusted sources, thereby reducing as much as possible the fraud possibilities and misleading information provision to the client (2) during the transaction.

The back-end application (11) acts like a payment gateway, and it operates according to the specifications of the certification authority (3) platform, providing it with the information required. Additionally, the invention exhibits a high degree of customisation and preferably allows the incorporation of the third-party's logos and style guide. Consequently, it enables the visual and operational perception that the invention is part of the third-party operational flows in a transparent way. The invention comprises several plugins which specify which third-party websites can be visited to collect information and which procedures must be carried out and included in the consolidated data of the end user that are obtained from the certification authorities (3).

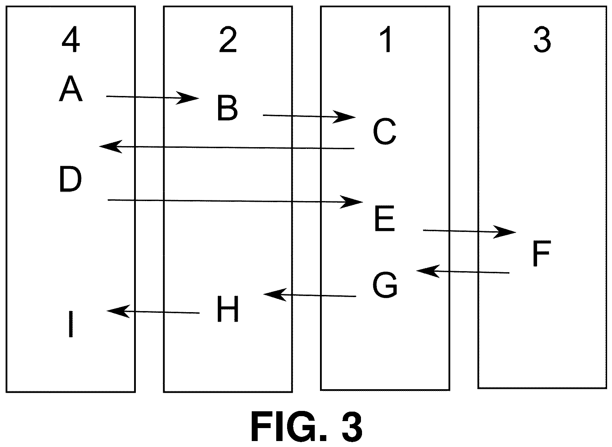

Figure 3 illustrates the flow of the operation of an embodiment of the invention, applied for risk evaluation oriented to grant a loan. According to the alphabetical references from Figure 3, the following steps are performed (in the same order in which they are described):
a) The end user, e.g. a company, requests a loan to a client (2) (acting as a banking services provider), in this case a bank. To contract this service, the positive evaluation of the bank risk department for said end user is required.
b) A commercial agent of the client (2) entity requests the data from the end user, which will be entered establishing a communication with the server (1) through the server web interface (12) (e.g. an authentication portal) accessible through the client web interface (21). The filling of a form by the client (2) will initiate the process of the electronic transaction, by indicating at least: id number or tax number and email. The rest of the information does not need to be provided by the end user, but it is later gathered by requests to the certifying authorities (3).
c) Creation of the proposal using the data from said form. Then, the server (1) sends a verification email (with a confirmation link) to the end user workstation (4) for obtaining privileges in order to use the digital certificates (43).
d) A company agent (i.e. manager) receives the email with the link. Said link is accessed through a web browser (41) to locally download and/or execute the gateway application (42), which comprises the client certification provider intended to read the existing digital certificates (43) installed in the end user workstation (4). In this way, the end user shares its digital certificates (43) with the server (1), which may store them by using data storage means (14).
e) The client (2) accesses through the client web interface (21) to an authentication portal of the back-end application (11). The back-end application (11) uses the end user digital certificates (43) to identify itself before one or more certifying authorities (3), e.g. third-party entities or services like tax agencies or government delegations acting as trusted sources of information, in order to collect the required documentation. Particularly, the password of the digital certificate (43) is required to proceed with the secure SSL authentication of the end user. The progress of the download is available for the client (2).
f) Once all the information is collected from one or more certifying authorities (3), it is returned to the back-end application (11).
g) The back-end application (11) downloads all the information from one or more certifying authorities (3) and conforms it according to the client (2) requirements. Then, the back-end application (11) transforms the raw information obtained from the certifying authorities (3) into interpreted data by means of scraping technology, just like it would do a browser. This interpreted knowledge is sent back to the client (2), along with the original information received from the certifying authorities (3). The client (2) may also require the transformation of the information to JSON format or similar.
h) The decision-making systems from the client (2) consider the overall interpreted information and compute risk parameters in order to reach an agreement or not with the end user about the required electronic transaction. The final decision is taken based on said parameters.
i) The end user, in this case the company, receives the decision of the client (2), either by automatised means (email, message issued by the invention, etc.) or in person.

The integration processes performed to yield interpreted data are based on a REST API ("application programming interface") that allows the gathering of documents and relevant information from different sources. The procedure can be easily integrated by means of API methods because it works as a point of sale (POS) as it were a payment gateway. Most of these methods, listed below, comprise add, delete, list and update commands and can be easily implemented by an expert of the technique:
- "AppModel": Entity models.
- "Auth": Authentication.
- "Cert": Use of certificates.
- "Certificate": Access to government documents.
- "Config": Configuration.
- "Delivery": Delivery of information.
- "Doc": Indexing of documents.
- "Organisation": Organisational chart and permission diagram.
- "Product": Configuration of the product and plugins.
- "Transaction": Creation and ending of the transaction based on the particular product or service to be provided.
- "User": User and roles.

With regard to the restrictions and equipment requirements (hardware and software), the invention incorporates a component, the client certification provider, on the end user workstation (4) aimed at obtaining one or more end user digital certificates (43), installed locally in its machine. the use of this preferred embodiment is applied to Windows (Microsoft) machines. Other prerequisite is the availability of a valid digital certificate (43). If the product selected by the end user requires the consultation of data in third-party electronic websites or platforms, it will be necessary to have at least one valid digital certificate (43) accepted by these platforms. For this reason, the digital certificate (43) must be provided to the server (1) in order to start the consultation process intended to the transaction.

The operation of the system for completing a transaction, which comprises the exchange of information among the end user workstation (4), client (2), certification authority (3) and the server (1) is described in the paragraphs below.

Firstly, the onset of the transaction involves the following steps:
- A welcome first screen is prompted to the end user workstation (4) to inform about the electronic transaction (e.g. a selected product or service) on which information inquiries will be conducted, by prior approval of the end user.
- A second screen displays the conditions and terms of use of the information system application which may vary according to the involved entities and the product or service associated with the transaction.

- The client (2) is requested to indicate which type or types of certificate to select among the available ones, either centralised (issued by the third-party entity that offers the service) or local digital certificates (43) which are available in the end user workstation (4).
- After the identification of the end user on the third-party entity's website, the system will show the list of centralised digital certificates (43) available for the transaction. Otherwise, the server (1) will require that the end user downloads and installs of the gateway application (42), the client component of the invention, in the end user workstation (4) in order to access the available local digital certificates (43). The case of local end user digital certificates (43) is detailed later in a preferred embodiment of the invention.
- Once selected, the gateway application (42) displays the basic information extracted from the certificate in order that the end user reviews it and confirms the selection of the proper certificate.

Secondly, after the approval of the end user for sharing information thereof with the client (2) and certifying authorities (3) services, the stage of obtaining end user information starts. At this point, the back-end application (11) will request the information and documentation required by the electronic websites (if necessary) and online third-party platforms included in the list of plugins associated with the selected product. This procedure will be repeated for each of the platforms that need additional information apart from that obtained through the certificate selected by the end user. Note that this step would be omitted if the electronic websites contemplated in the transaction require no additional information during the transaction creation.

In third place, once the gathering of all the information is completed, the back-end application (11) processes the information requests and required data analysis. The client (2) will be able to check the progress of the actions in progress by means of the web interface (21).

In fourth place, when the operations in progress are finished, the back-end application (11) prompts a message with a summary of the transaction result.

In fifth place, the invention sends the response to the transaction. After the completion of said transaction, the system sends the information resulting from the transaction in a predefined format (i.e. in the product parametrisation) to the entity collaborator. In the event of any incident in the delivery procedure, the documentation will remain available through integration.

The client certification provider included in the gateway application (42) is the external component or module of the invention for reading local digital certificates (43). It is intended to enable the use of local digital certificates (43) for the process of identifying the interested party before the public administrations to make a transaction. In this way, thanks to client certification provider, the local digital certificates (43) are accessible to the client web interface (21) from which the transaction is being managed. The next paragraphs delve into aspects of the client certification provider such as its formats, operation, requirements, restrictions, and parametrisation.

It is worth remarking that during the installation of the client gateway application (42), Windows registry must be configured. Indeed, certain registers must be added so that the use of external protocols is allowed and how to operate depending on each one. First, several registers are added to KEY CLASSES_ROOT to allow the URIs ("Uniform Resource Identifier") corresponding to the invention to have a special treatment. Next, it must be indicated how to operate if the event that said customised URI arrives the instruction must launch the application, passing the URI itself as a parameter.

The application initialisation is triggered by using a customised URI that includes the identifier of the transaction that requires its use and the environment to which it must send the information. The default environment is production, so in this case only the transaction identifier is required. It should be noted that launching the invention applications through this type of URI requires user previous acceptance of the end user for security reasons. Every time one of these URIs is launched, a dialog box will prompt to ask for confirmation before running the application.

The available formats for the client certification provider module comprise an installer or an executable file, both of them available for download from the gateway component interface during the process of preparing and collecting data for the transaction.
- Windows installer program (file with format .MSI), which consists of installing the gateway application (42) on the end user workstation (4) so that it can be reused in future transactions. The gateway application (42) can be installed in real time during the preparation of a transaction or even prepare a massive distribution if the project conditions allow it.
- Executable program (file with format .EXE), intended to be use in the context of a transaction without the need to install the component on the end user workstation (4).

Preferably, the end user requires having administrative privileges for installing either the installer or the executable version.

The internal functioning of the gateway application (42) of the invention in the executable mode, being the following steps of its workflow summarised below:
- The end user, or interested party, downloads the gateway application (42) in the end user workstation (4) and launches it.
- The gateway application (42) builds a local server to allow a communication with the back-end application (11) of the invention.
- The server (1) notifies to the gateway application (42) the necessary parameters to choose the certificates available for the transaction. Specifically, the parameters comprise an identifier of the transaction associated with the request and the environment (Production, Demo, Test) in which the transaction takes place.
- The client certification provider makes the digital certificates (43) available to the back-end application (11), which serves as a gateway and arrange them in a compatible way with the transaction in progress, so that the end user selects the digital certificate (43) to be used for the identification in the face of certification authorities (3) such as public administrations.
- The gateway application (42) makes requests to the back-end application (11) awaiting instructions, normally to enable a signature (hash) of an element with the certificate indicated by the invention. In the event of any error during the transaction, the instruction indicates a controlled closing of the transaction.
- If the previous step is carried out properly, and after completing its task, the application closes automatically in a transparent way to the client (2).

The internal operation of the invention component related to the installer mode will now be described, along with its operative use in the case of local digital certificates (43) of the end user. In particular, the following steps must be considered:
- The gateway application (42) must be installed on the computer of the end user. This process can be carried out before or during the execution of the transaction upon request to the back-end application (11).

- During the process of transaction preparation, the client (2) selects at least one local digital certificate (43). In this case, a request will be launched from the back-end application (11) to open the installed gateway application (42).
- The gateway application (42), once started, indicates to the back-end application (11) that is running.
- The client certification provider of the gateway application (42) makes the local certificates (43) available to the back-end application (11) and arrange them in a compatible way with the transaction in progress, so that the end user select the appropriate certificate for identifying before the public administrations.
- The gateway application (42) makes requests to back-end application (11) awaiting instructions, normally to enable a signature (hash) of an element with the digital certificate (43) indicated by the back-end application (11). In the event of any error during the transaction, a controlled closing thereof is performed.
- If the previous step is carried out properly, and after completing its task, the application closes automatically in a transparent way for the end user.

In the context of the client certificate validation, an SSL ("Secure Sockets Layer") authentication is applied. The connection requires a "HTTP Request" of .NET framework. In this way, by using at least one digital certificate (43) installed in the end user workstation (4) through the client certification provider of the gateway application (42), a connection to the certification authorities (3) services is established.

Here, we detail the exchange of messages between the client (2) and the server (1) for starting a transaction:
- The active opening of the transaction is performed by the client (2) sending a synchronisation (SYN) message to the server (1). The client (2) sets a sequence number of the segment to a random value A.
- In response, the server (1) replies with a synchronisation acknowledgment (SYN-ACK) to the client (2). The acknowledgment number is incremented by one regarding the received sequence number, i.e. A+1, and the sequence number that the server (1) chooses for the transaction is another random number B.
- Finally, the client (2) sends an ACK back to the server (1). The sequence number is set to the received acknowledgment value, i.e. A+1, and the acknowledgment number is incremented by one regarding the received sequence number, i.e. B+1.

At this point, the connection is established and both the client (2) and server (1) have received an acknowledgment to one another. Then, the followings steps are executed:
- The client (2) sends to the server (1) a CLIENT HELLO message comprising SSL Protocol Version, Session ID, list of supported Cipher Suites and the CLIENT HELLO Extensions.
- The server (1) sends back to the client a SERVER HELLO message including SSL protocol version, session identifier, selected cipher, server certificate, SERVER HELLO Extensions, an optional list of accepted certification authorities (3) and the certificate request.
- The client (2) creates a secret for the session, encrypted with the server (1) public key and sends it back to it.
- Then, the client (2) also sends the client public certificate and signed data from the certificate request).
- The back-end application (11) verifies the end user digital certificate/s (43) against public key, checks revocation and expiration status and checks for certification authority (3) trusting.
- At this point the session key is created. Both the client (2) and server (1) use the master secret to generate symmetric session key according to the RFC 5246 8.1. Then, the client (2) sends to the server (1) a message "Client Finalised", indicating that all it is ready to start the communication. The server (1) answers with a "Server finalised" message, in order that both the client (2) and server (1) can communicate over a secured channel by exchanging encrypted messages.

Web scraping technology of analysis is a widely known technique for extracting information from third-party websites. This technique simulates the navigation of a human on the World Wide Web (WWW) using the HTTP (Hypertext Transfer Protocol) in an automatised way. Most of the search engines have adopted web scraping. However, the invention uses this technique for transforming unstructured data on the web (such as HTML format) into structured data which can be stored and analysed, for instance, in a central database or a spreadsheet. More particularly, the web scraping is applied to download end user documentation (mainly text information), via SSL end user authentication by means of a local certificate (43).

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. Information system for managing at least one digital certificate (43) from an end user in electronic transactions, comprising:
- a server (1) a client (2) and a workstation (4) operable by a end user, wherein:
- the client (2) is adapted to receive by the end user a request an electronic transaction;-
the client (2) is adapted to require identification information to the end user;
- the client (2) is adapted to establish a communication with the server (1);
- the client (2) is adapted to send a request to the server (1) for an electronic transaction on behalf of the end user comprising the identification information;
and further **characterised in that**:
- the server (1) is adapted to send to the end user workstation (4) an installation request to download and execute a gateway application (42) adapted to provide the server (1) with a digital certificate (43);
- the server (1) is adapted to obtain at least one valid digital certificate (43) suitable for performing the electronic transaction, by means of the gateway application (42);
- the server (1) is adapted to obtain trusted information about the end user from one or more certification authorities (3) by means of one or more digital certificates (43);
- the server (1) is adapted to send to the client (2) the trusted information obtained from the certification authorities (3).

2. Information system according to the preceding claim, wherein the gateway application (42) further comprises searching means adapted to automatically search the digital certificate (43) installed in the workstation (4).

3. Information system according to the preceding claim, wherein the searching means are adapted to automatically search further digital certificates (43) in the workstation.

4. Information system according to any of the preceding claims, which further comprises at least one secured encrypted channel to conduct the electronic transactions.

5. Information system according to any of the preceding claims, wherein the server (1) further comprises a server web interface (12) through which it communicates with the client (2) or at least one certifying authority (3).

6. Information system according to any of the preceding claims, wherein the server (1) further comprises a service catalogue database with a list of plugins associated with different electronic transactions.

7. Information system according to any of the preceding claims, wherein the server (1) further comprises data processing means adapted to automatically process information exchanged between the server (1), the client (2), the certifying authorities (3) and the workstation (4).

8. Information system according to any of the preceding claims, wherein the server (1) further comprises second electronic delivery means adapted to send installation requests to the workstation (4) and data storage means (14) adapted to store end user digital certificates (43).

9. Information system according to the preceding claim, wherein the installation request comprises a link to a website where the gateway application (42) is hosted or a file with said gateway application (42) attached.

10. Information system according to any of the preceding claims, which further comprises a plurality of servers (1), clients (2) and/or workstations (4).

11. Method for operating an information system according to any of the preceding claims for managing at least one digital certificate (43) of an end user, wherein said method comprises performing the following steps:
- the end user requests an electronic transaction to a client (2);
- the client (2) requires identification information to the end user;
- the client (2) establishes a communication with the server (1);
- the client (2) sends a request to the server (1) for an electronic transaction on behalf of the end user comprising the identification information;
and further **characterised in that:**
- the server (1) sends to an end user workstation (4) an installation request to download and execute a gateway application (42) adapted to provide the server (1) with a digital certificate (43).
- the server (1) obtains at least one valid digital certificate (43) suitable for performing the electronic transaction, by means of the gateway application (42);
- the server (1) obtains trusted information about the end user from one or more certification authorities (3) by means of one or more digital certificates (43);
- the server (1) sends to the client (2) the trusted information obtained from the certification authorities (3).

12. Method according to of the preceding claim, wherein the server (1) further transforms the trusted information acquired from the certifying authorities (3) into interpreted trusted information, before sending said interpreted trusted information to the client (2).

13. Method according to any of claims 11-12, wherein the digital certificate (43) is stored in the server (1) in order to reuse said digital certificate (43) in future transactions with the same end user.

14. Method according to any of claims 11-13, wherein the data processing means are further configured to disaggregate and anonymise the trusted information and obtain statistics from said information.

## Patentansprüche

1. Informationssystem zur Verwaltung mindestens eines digitalen Zertifikats (43) von einem Endnutzer in elektronischen Transaktionen, umfassend:
- einen Server (1), einen Kunden (2) und eine Workstation (4), welche von einem Endnutzer betrieben werden kann, wobei:
- der Kunde (2) dazu angepasst ist, vom Endnutzer eine Aufforderung für eine elektronische Transaktion zu empfangen;
- der Kunde (2) dazu angepasst ist, dem Endnutzer Identifizierungsinformation anzufordern;
- der Kunde (2) dazu angepasst ist, eine Kommunikation mit dem Server (1) herzustellen;
- der Kunde (2) dazu angepasst ist, dem Server (1) eine Aufforderung für eine elektronische Transaktion im Namen vom Endnutzer umfassend die Identifizierungsinformation zu senden;
und welches zusätzlich **dadurch gekennzeichnet ist, dass**:
- der Server (1) dazu angepasst ist, der Endnutzer-Workstation (4) eine Installationsaufforderung zu senden, um eine Gateway-Anwendung (42) runterzuladen und auszuführen, welche dazu angepasst ist, dem Server (1) mit einem digitalen Zertifikat (43) zu versehen;
- der Server (1) dazu angepasst ist, mindestens ein gültiges digitales Zertifikat (43) zu erhalten, welches dafür geeignet ist, die elektronische Transaktion mittels der Gateway-Anwendung (42) durchzuführen;
- der Server (1) dazu angepasst ist, vertrauenswürdige Information über den Endnutzer aus einer oder mehreren Zertifizierungsstellen (3) mittels eines oder mehrerer digitalen Zertifikate (43) zu erhalten;
- der Server (1) dazu angepasst ist, dem Kunden (2) die vertrauenswürdige Information, welche aus den Zertifizierungsstellen (3) erhalten wurde, zu senden.

2. Informationssystem nach dem vorhergehenden Anspruch, wobei die Gateway-Anwendung (42) zusätzlich Suchmittel umfasst, welche dazu angepasst sind, das digitale Zertifikat (43), welches in der Workstation (4) installiert ist, automatisch zu suchen.

3. Informationssystem nach dem vorhergehenden Anspruch, wobei die Suchmittel dazu angepasst sind, zusätzliche digitale Zertifikate (43) in der Workstation automatisch zu suchen.

4. Informationssystem nach einem der vorhergehenden Ansprüche, welches zusätzlich mindestens einen gesicherten verschlüsselten Kanal umfasst, um die elektronischen Transaktionen durchzuführen.

5. Informationssystem nach einem der vorhergehenden Ansprüche, wobei der Server (1) zusätzlich eine Server-Webschnittstelle (12) umfasst, durch welche es mit dem Kunden (2) oder mindestens einer Zertifizierungsstelle (3) kommuniziert.

6. Informationssystem nach einem der vorhergehenden Ansprüche, wobei der Server (1) zusätzliche eine Dienstleistungskatalog-Datenbank mit einer Liste von Plug-ins, welche mit unterschiedlichen elektronischen Transaktionen assoziiert sind, umfasst.

7. Informationssystem nach einem der vorhergehenden Ansprüche, wobei der Server (1) zusätzlich Datenverarbeitungsmittel umfasst, welche dazu angepasst sind, Information, welche zwischen dem Server (1), dem Kunden (2), den Zertifizierungsstellen (3) und der Workstation (4) ausgetauscht werden, automatisch zu verarbeiten.

8. Informationssystem nach einem der vorhergehenden Ansprüche, wobei der Server (1) zusätzlich zweite elektronische Übergabemittel, welche dazu angepasst sind, Installationsaufforderungen der Workstation (4) zu senden, und Datenspeicherungsmittel (14), welche dazu angepasst sind, digitale Zertifikate von Endnutzern (43) zu speichern, umfasst.

9. Informationssystem nach dem vorhergehenden Anspruch, wobei die Installationsaufforderung einen Link zu einer Webseite, in welcher die Gateway-Anwendung (42) gehostet, ist oder eine Datei mit der genannten Gateway-Anwendung (42) beigefügt, umfasst.

10. Informationssystem nach einem der vorhergehenden Ansprüche, welches zusätzlich eine Vielzahl von Servern (1), Kunden (2) und/oder Werkstationen (4) umfasst.

11. Verfahren zum Betreiben eines Informationssystems nach einem der vorhergehenden Ansprüche zur Verwaltung mindestens eines digitalen Zertifikats (43) eines Endnutzers, wobei das genannte Verfahren das Durchführen der folgenden Schritte umfasst:
- der Endnutzer fordert den Kunden (2) eine elektronische Transaktion auf;
- der Kunde (2) fordert dem Endnutzer Identifizierungsinformation an;
- der Kunde (2) stellt eine Kommunikation mit dem Server (1) her;
- der Kunde (2) sendet eine Aufforderung zum Server (1) für eine elektronische Transaktion im Namen vom Endnutzer umfassend die Identifizierungsinformation;
und zusätzlich **dadurch gekennzeichnet, dass**:
- der Server (1) sendet einer Endnutzer-Workstation (4) eine Installationsaufforderung eine Gateway-Anwendung (42) runterzuladen und auszuführen, welche dazu angepasst ist, dem Server (1) mit einem digitalen Zertifikat (43) bereitzustellen;
- der Server (1) erhält mindestens ein gültiges digitales Zertifikat (43), welches dafür geeignet ist, die elektronische Transaktion mittels der Gateway-Anwendung (42) durchzuführen;
- der Server (1) erhält vertrauenswürdige Information über den Endnutzer aus einer oder mehreren Zertifizierungsstellen (3) mittels eines oder mehrerer digitalen Zertifikate (43);
- der Server (1) sendet dem Kunden (2) die vertrauenswürdige Information, welche aus den Zertifizierungsstellen (3) erhalten wurde.

12. Verfahren nach dem vorhergehenden Anspruch, wobei der Server (1) zusätzlich die vertrauenswürdige Information, welche aus den Zertifizierungsstellen (3) erworben wurde, in interpretierte vertrauenswürdige Information verwandelt, bevor die genannte interpretierte vertrauenswürdige Information dem Kunden (2) gesendet wird.

13. Verfahren nach einem der Ansprüche 11-12, wobei das digitale Zertifikat (43) im Server (1) gespeichert wird, um das genannte digitale Zertifikat (43) in zukünftigen Transaktionen mit dem gleichen Endnutzer wiederzuverwenden.

14. Verfahren nach einem der Ansprüche 11-13, wobei die Datenverarbeitungsmittel zusätzlich dazu ausgebildet sind, die vertrauenswürdige Information zu zerteilen und anonymisieren und Statistiken aus der genannten Information zu erhalten.

## Revendications

1. Système d'information pour la gestion d'au moins un certificat numérique (43) depuis un utilisateur final dans des transactions électroniques, comprenant :
- un serveur (1), un client (2) et une station de travail (4) utilisable par un utilisateur final, dans lequel :
- le client (2) est adapté pour recevoir par l'utilisateur final une requête d'une transaction électronique ;
- le client (2) est adapté pour requérir de l'information d'identification à l'utilisateur final ;
- le client (2) est adapté pour établir une communication avec le serveur (1) ;
- le client (2) est adapté pour envoyer une requête au serveur (1) pour une transaction électronique pour le compte de l'utilisateur final comprenant l'information d'identification ;
et **caractérisé en outre en ce que** :
- le serveur (1) est adapté pour envoyer à la station de travail de l'utilisateur final (4) une requête d'installation pour télécharger et exécuter une application de passerelle (42) adaptée pour fournir au serveur (1) un certificat numérique (43) ;
- le serveur (1) est adapté pour obtenir au moins un certificat numérique valide (43) approprié pour réaliser la transaction électronique, au moyen de l'application de passerelle (42) ;
- le serveur (1) est adapté pour obtenir de l'information fiable au sujet de l'utilisateur final depuis une ou plusieurs autorités de certification (3) au moyen d'un ou plusieurs certificats numériques (43) ;
- le serveur (1) est adapté pour envoyer au client (2) l'information fiable obtenue depuis les autorités de certification (3).

2. Système d'information selon la revendication précédente, dans lequel l'application de passerelle (42) comprend en outre des moyens de recherche adaptés pour rechercher automatiquement le certificat numérique (43) installé dans la station de travail (4).

3. Système d'information selon la revendication précédente, dans lequel les moyens de recherche sont adaptés pour rechercher automatiquement des certificats numériques additionnels (43) dans la station de travail.

4. Système d'information selon l'une quelconque des revendications précédentes, qui comprend en outre au moins un canal crypté sécurisé pour conduire les transactions électroniques.

5. Système d'information selon l'une quelconque des revendications précédentes, dans lequel le serveur (1) comprend en outre une interface web de serveur (12) par laquelle il communique avec le client (2) ou au moins une autorité de certification (3).

6. Système d'information selon l'une quelconque des revendications précédentes, dans lequel le serveur (1) comprend en outre une base de données de catalogue de services avec une liste de modules d'extension associés à différentes transactions électroniques.

7. Système d'information selon l'une quelconque des revendications précédentes, dans lequel le serveur (1) comprend en outre des moyens de traitement des données adaptés pour traiter automatiquement de l'information échangée entre le serveur (1), le client (2), les autorités de certification (3) et la station de travail (4).

8. Système d'information selon l'une quelconque des revendications précédentes, dans lequel le serveur (1) comprend en outre des seconds moyens de distribution électronique adaptés pour envoyer des requêtes d'installation à la station de travail (4) et des moyens de stockage de données (14) adaptés pour stocker des certificats numériques de l'utilisateur final (43)

9. Système d'information selon la revendication précédente, dans lequel la requête d'installation comprend un lien à un site web où l'application de passerelle (42) est hébergée ou un fichier avec ladite application de passerelle (42) en pièce jointe.

10. Système d'information selon l'une quelconque des revendications précédentes, qui comprend en outre une pluralité de serveurs (1), clients (2) et/ou stations de travail (4).

11. Procédé pour faire fonctionner un système d'information selon l'une quelconque des revendications précédentes pour la gestion d'au moins un certificat numérique (43) d'un utilisateur final, dans lequel ledit procédé comprend réaliser les étapes suivantes :
- l'utilisateur final sollicite une transaction électronique à un client (2) ;
- le client (2) sollicite information d'identification à l'utilisateur final ;
- le client (2) établit une communication avec le serveur (1) ;
- le client (2) envoie une requête au serveur (1) pour une transaction électronique pour le compte de l'utilisateur final comprenant l'information d'identification ;
et **caractérisé en outre en ce que** :
- le serveur (1) envoie à une station de travail d'utilisateur final (4) une requête d'installation pour télécharger et exécuter une application de passerelle (42) adaptée pour fournir au serveur (1) un certificat numérique (43) ;
- le serveur (1) obtient au moins un certificat numérique valide (43) approprié pour réaliser la transaction électronique, au moyen de l'application de passerelle (42) ;
- le serveur (1) obtient de l'information fiable au sujet de l'utilisateur final depuis une ou plusieurs autorités de certification (3) au moyen d'un ou plusieurs certificats numériques (43) ;
- le serveur (1) envoie au client (2) l'information fiable obtenue depuis les autorités de certification (3).

12. Procédé selon la revendication précédente, dans lequel le serveur (1) transforme en outre l'information fiable acquise depuis les autorités de certification (3) en information fiable interprétée, avant d'envoyer ladite information fiable interprétée au client (2).

13. Procédé selon l'une quelconque des revendications 11-12, dans lequel le certificat numérique (43) est stocké dans le serveur (1) afin de réutiliser ledit certificat numérique (43) dans des transactions futures avec le même utilisateur final.

14. Procédé selon l'une quelconque des revendications 11-13, dans lequel les moyens de traitement de données sont en outre configurés pour désagréger et anonymiser l'information fiable et obtenir des statistiques depuis ladite information.
